# EUROPÄISCHE PATENTSCHRIFT

(11) **EP 3 471 244 B1**
(45) Veröffentlichungstag und Bekanntmachung des Hinweises auf die Patenterteilung: **08.09.2021**
(21) Anmeldenummer: 18020231.9
(22) Anmeldetag: 24.05.2018
(51) Int. Cl.: H02K 15/03, H02K 15/16, H02K 1/27

(54) **VERFAHREN ZUR MONTAGE VON LÄUFERN ELEKTRISCHER MASCHINEN**
METHOD FOR ASSEMBLING OF ELECTRICAL MACHINE ROTORS
PROCÉDÉ DE MONTAGE DE ROTORS DE MOTEURS ÉLECTRIQUES

(30) Priorität: 12.10.2017 DE 102017123703
(43) Veröffentlichungstag der Anmeldung: 17.04.2019
(73) Patentinhaber: Dr. Ing. h.c. F. Porsche AG, 70435 Stuttgart (DE)
(72) Erfinder: Stoll, Johannes, 73614 Schorndorf (DE); Michna, Gregor, 71297 Mönsheim (DE); Fleischer, Jürgen, 76228 Karlsruhe (DE); Peter, Manuel, 76889 Oberrotterbach (DE)

(56) Entgegenhaltungen:
- DE-A1-102013 215 080
- US-A1- 2016 013 709

## Beschreibung

Die hier vorliegende Erfindung betrifft ein Verfahren zur Montage von Läufern elektrischer Maschinen.

Ein Läufer einer elektrischen Maschine verfügt über eine Welle, über ein auf der Welle positioniertes Blechpaket sowie über Magnete, die in Magnettaschen des Blechpakets positioniert sind. Die Magnete bilden Polpaare. Das Blechpaket des Läufers einer elektrischen Maschine kann als segmentiertes Blechpaket aus mehreren in Axialrichtung der Welle gesehen nebeneinander bzw. hintereinander positionierten Blechpaketsegmenten ausgebildet sein.

Fertigungsabweichungen der einzelnen Baugruppen des Läufers führen trotz einer oftmals symmetrischen Bauweise des Läufers zu einer Unwucht. Überschreitet die Unwucht einen Grenzwert, kommt es im Betrieb der elektrischen Maschine zu unerwünschten Vibrationen, Geräuschen oder einem vorzeitigen Ausfall.

Zur Kompensation der Unwucht eines Läufers einer elektrischen Maschine ist es aus der Praxis bekannt, einen Läufer auszuwuchten. Hierzu wird die Unwucht gemessen und die Unwucht beim Wuchten beseitigt, und zwar durch einen Massenausgleich am Läufer.

Der Massenausgleich beim Wuchten kann durch Wegnahme von Masse durch sogenanntes Negativ-Wuchten oder durch Hinzufügen von Masse als sogenanntes Positiv-Wuchten durchgeführt werden kann.

Negativ-Wuchten wird auch als Subtraktives-Wuchten und Positiv-Wuchten auch als Additives-Wuchten bezeichnet.

Bei aus der Praxis bekannten Verfahren zur Herstellung schnelllaufender elektrischer Maschinen, die mit Drehzahlen von mehreren 1000 U/min betrieben werden, findet typischerweise Negativ-Wuchten Verwendung. Dies liegt insbesondere daran, dass aufgrund einer hohen zu kompensierenden Unwucht Positiv-Wuchten nicht sinnvoll eingesetzt werden kann, da die beim Positiv-Wuchten hinzufügbaren Massen hierzu nicht ausreichen.

Das Beschädigen des Läufers einer elektrischen Maschine beim Negativ-Wuchten ist jedoch für Hochleistungsmaschinen nicht tolerabel. Daher ist es aus der Praxis bekannt, zusätzlich zu den oben erwähnten Baugruppen der Welle, des Blechpakets sowie der Magnete am Läufer einer elektrischen Maschine eine Opfermasse bereitzuhalten, von der für das Negativ-Wuchten Masse weggenommen werden kann. Derartige Opfermassen für das Negativ-Wuchten werden auch als Wuchtscheiben bezeichnet.

Das Vorsehen von Wuchtscheiben verfügt jedoch über den Nachteil, dass sich einerseits die axiale Baulänge des Läufers erhöht und andererseits die Masse des Läufers erhöht wird.

DE 10 2013 215 080 A1 offenbart ein Verfahren zum Auswuchten eines Rotors einer elektrischen Maschine. Es wird ein Rotorverbund aus Rotorblechpaketen und Permanentmagneten aufgebaut. Für den Rotorverbund wird eine Verbundunwucht bestimmt. Ferner wird für eine Rotorwelle, auf welcher der Rotorverbund anzuordnen ist, eine Wellenunwucht bestimmt. Der Rotorverbund und die Rotorwelle werden in Abhängigkeit der Verbundunwucht und der Wellenunwucht zueinander ausgerichtet, insbesondere dadurch, dass Rotorwelle und Rotorverbund zueinander verdreht werden.

US 2016/0013709 A1 offenbart ein Verfahren zur Herstellung eines Rotorkerns, der aus einer Vielzahl von Eisenkernstückenaufgebaut ist. Der Rotorkern verfügt weiterhin über Einführöffnungen für Magnete, in welche Permanentmagnete eingesetzt werden. Die in die Ausnehmungen eingesetzten Permanentmagnete erstrecken sich über sämtliche Kernstücke.

Aufgabe der Erfindung ist es, ein neuartiges Verfahren zur Montage von Läufern elektrischer Maschinen zu schaffen.

Diese Aufgabe wird durch ein Verfahren zur Montage von Läufern elektrischer Maschinen gemäß Anspruch 1 gelöst.

Das erfindungsgemäße Verfahren umfasst zumindest die folgenden Schritte:
Bereitstellen von Wellen für die Läufer und Vermessen einer Unwucht mindestens einer Welle.

Bereitstellen von Blechpaketen oder Blechpaketsegmenten für die Läufer und Vermessen m einer Unwucht indestens eines Blechpakets oder mindestens eines Blechpaketsegments.

Bereitstellen mehrerer Magnete für die Läufer und Vermessen eines Gewichts der Magnete.

Für jeden herzustellenden Läufer Auswählen eines Blechpakets oder mehrerer Blechpaketsegmente, Auswählen einer Welle und Auswählen von Magneten.

Für jeden herzustellenden Läufer Berechnen von Montagepositionen für die ausgewählten Magnete in den Magnettaschen des ausgewählten Blechpakets oder der ausgewählten Blechpaketsegmente sowie Berechnen einer Umfangsposition für das ausgewählte Blechpaket oder einer Umfangsposition und/oder Axialpostion für die ausgewählten Blechpaketsegmente auf der ausgewählten Welle in Abhängigkeit der vermessenen Unwucht des jeweiligen Blechpakets oder der jeweiligen Blechpaketsegmente, in Abhängigkeit des vermessenen Gewichts der jeweiligen Magnete und in Abhängigkeit der vermessenen Unwucht der jeweiligen Welle.

Montieren der Magnete in den berechneten Montagepositionen in den Magnettaschen des Blechpakets oder der Blechpaketsegmente.

Montieren des Blechpakets oder der Blechpaketsegmente auf der Welle in der berechneten Montageposition.

Dem erfindungsgemäßen Verfahren liegt der Gedanke zugrunde, die einzelnen Baugruppen des Läufers, nämlich die Welle, das Blechpaket bzw. die Blechpaketsegmente und die Magnete, vor der Montage zu vermessen und auf Grundlage der Vermessung dieser Baugruppen die Montage des Läufers so vorzusehen, dass nach der Montage des Läufers eine möglichst minimale Unwucht an demselben vorliegt.

Unter Umständen kann auf ein nachfolgendes Wuchten vollständig verzichtet werden. In jedem Fall ist es möglich, durch die erfindungsgemäße Montage des Läufers einer elektrischen Maschine nach der Montage eine Unwucht bereitzustellen, die so gering ist, dass dieselbe durch Positiv-Wuchten kompensiert werden kann. Hierdurch ist es möglich, auf Opfermassen für Negativ-Wuchten zu verzichten. Dies hat Vorteile für die Rotordynamik infolge einer Gewichtsverringerung sowie im Hinblick auf den Bauraumbedarf eines Läufers.

Nach einer vorteilhaften Weiterbildung der Erfindung werden zunächst die ausgewählten Magnete in den Magnettaschen des ausgewählten Blechpakets oder der ausgewählten Blechpaketsegmente in den berechneten Montagepositionen montiert, wobei anschließend das mit den Magneten bestückte Blechpaket oder die mit den Magneten bestückten Blechpaketsegmente auf der ausgewählten Welle in der berechneten Montageposition oder in den berechneten Montagepositionen montiert wird oder werden. Diese Montagereihenfolge ist besonders bevorzugt, um einen Läufer mit möglichst geringer Unwucht bereitzustellen.

Nach einer vorteilhaften Weiterbildung der Erfindung werden dann, wenn der jeweilige Läufer ein segmentiertes Blechpaket aus mehreren in Axialrichtung des Läufers hintereinander angeordneten Blechpaketsegmenten aufweist, Axialpositionen und Umfangspositionen für die Blechpaketsegmente auf der Welle berechnet. Dann, wenn ein segmentiertes Blechpaket aus mehreren Blechpaketsegmenten genutzt wird, kann die Axialposition der Blechpaketsegmente zueinander und Umfangsposition der Blechpaketsegmente zueinander genutzt werden, um die Unwucht des zu montierenden Läufers weiter zu reduzieren.

Nach einer vorteilhaften Weiterbildung erfolgt das Berechnen der Montagepositionen für die Magnete in den Magnettaschen des Blechpakets oder der Blechpaketsegmente sowie vorzugsweise das Berechnen der Montageposition für das Blechpaket oder für die Blechpaketsegmente auf der Welle in Abhängigkeit einer zum Montieren der Magnete in den Magnettaschen genutzten Klebermasse. Durch die Berücksichtigung der zur Montage der Magnete in den Magnettaschen genutzten Klebermasse kann die Unwucht des montierten Läufers weiter reduziert werden.

Nach einer vorteilhaften Weiterbildung wird nach dem Montieren der Magnete in den Magnettaschen des Blechpakets oder der Blechpaketsegmente sowie nach dem Montieren des Blechpakets oder der Blechpaketsegmente auf der Welle ein Unwucht des montierten Läufers gemessen, wobei dann, wenn die Unwucht größer als ein Grenzwert ist, ein Wuchten des montierten Läufers durchgeführt wird, vorzugsweise als Positiv-Wuchten durch Materialauftrag im Milligramm-Bereich. Sollte der Läufer nach der Montage eine Unwucht aufweisen, die noch kompensiert werden muss, so kann hierzu Positiv-Wuchten durch Materialauftrag im Milligramm-Bereich erfolgen. Auf Negativ-Wuchten sowie auf das Bereithalten einer Opfermasse kann gänzlich verzichtet werden. Hierdurch kann nicht nur die Baulänge von Läufern reduziert werden, ferner auch das Gewicht derselben.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

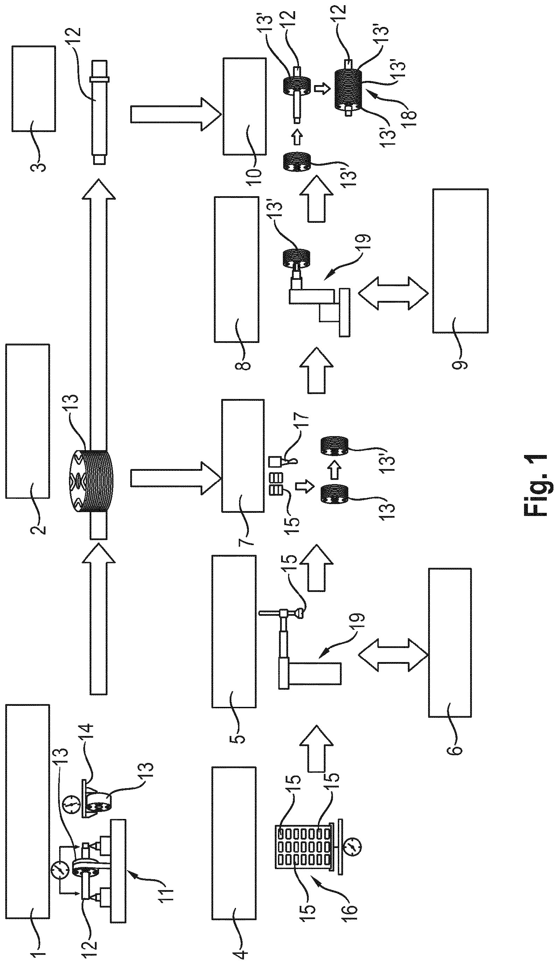

- Fig. 1: ein Schaubild zur Verdeutlichung des Verfahrens zur intelligenten Montage von Läufern elektrischer Maschinen.

Die Erfindung betrifft ein Verfahren zur Montage von Läufern elektrischer Maschinen. Jeder der zur montierenden Läufer einer elektrischen Maschine verfügt über eine Welle, über ein auf der Welle angeordnetes, vorzugsweise aus mehreren Blechpaketsegmenten zusammengesetztes, segmentiertes Blechpaket mit Magnettaschen sowie über in den Magnettaschen des Blechpakets bzw. der Blechpaketsegmente angeordnete Magnete. Die Magnete bilden Polpaare.

Nachfolgend wird das erfindungsgemäße Verfahren zur Montage von Läufern elektrischer Maschinen unter Bezugnahme auf das Schaubild der Fig. 1 beschrieben, und zwar für den bevorzugten Fall, in welchem das Blechpaket eines jeweiligen Läufers aus mehreren Blechpaketsegmenten zusammengesetzt ist.

Zunächst werden, siehe Block 1der Fig. 1, Wellen 12 für zu montierende Läufer elektrischer Maschinen bereitgestellt, wobei mindestens eine Welle 12 vermessen wird, nämlich zur Bestimmung einer Unwucht dieser Welle 12.

Ferner werden in Block 1 der Fig. 1 für segmentierte Blechpakete Blechpaketsegmente 13 bereitgestellt, wobei mindestens eines der Blechpaketsegmente 13 in Block 1 vermessen wird, nämlich zur Bestimmung einer Unwucht des Blechpaketsegments 13. Dann, wenn mehrere Läufer identischer Bauart mit hinsichtlich ihrer Bauart identischen Wellen 12 und identischen Blechpaketsegmenten 13 zu montieren sind, und wenn weiterhin eine fertigungsbedingte Streuung zwischen den Wellen 12 und den Blechpaketsegmenten 13 vernachlässigbar gering ist, ist es ausreichend, lediglich eine Welle 12 und lediglich ein Blechpaketsegment 13 oder eine Teilmenge von Wellen 12 und eine Teilmenge von Blechpaketsegmenten 13 hinsichtlich ihrer Unwucht zu vermessen, wobei zum Beispiel dann, wenn eine Teilmenge von Wellen 12 und Blechpaketsegmenten 13 in Block 1 vermessen wird, aus den ermittelten Unwuchten entsprechende Mittelwerte gebildet werden können. Die Genauigkeit bzw. Qualität der Montage kann jedoch gesteigert werden, wenn sämtliche bereitgestellten Wellen 12 und sämtliche bereitgestellten Blechpaketsegmente 13 in Block 1 hinsichtlich ihrer Unwucht vermessen werden. In Fig. 1 ist unterhalb des Blocks 1 eine Unwuchtmesseinrichtung 11 gezeigt, auf welcher eine Welle 12 und ein Blechpaketsegment 13 zur Unwuchtmessung positioniert sind. Ferner können in Block 1 auch geometrische Abmessungen der Blechpaketsegmente 13 erfasst werden, so zum Beispiel eine Dicke und ein Durchmesser derselben. Fig. 1 zeigt unterhalb des Blocks 1 eine Messeinrichtung 14 zur Erfassung solcher geometrischer Kenngrößen.

Die Bestimmung der Unwucht der oder jeder Welle 12 sowie die Bestimmung der Unwucht des oder jedes Blechpakets 13 in Block 1 erfolgt vorzugsweise mit einer Messauflösung von weniger als 0,3 gmm, insbesondere mit einer Messauflösung von weniger als 0,1 gmm. Die Unwuchtmessung an einer zu vermessenden Welle 12 erfolgt vorzugsweise in mehreren axial beabstandeten Ebenen, vorzugsweise in zwei Ebenen. Die Unwuchtmessung an einem Blechpaketsegment 13 erfolgt aufgrund der geringen axialen Dicke desselben vorzusweise ausschließlich in einer Ebene.

Wie oben im Zusammenhang mit Fig. 1 ausgeführt, kann es ausreichend sein, nicht alle Wellen 12 und nicht alle Blechpakete 13 zu vermessen, sondern lediglich eine Stichprobe. Die Qualität der Läufermontage kann jedoch erhöht werden, wenn sämtliche bereitgestellten Wellen 12 und sämtliche bereitgestellten Blechpaketsegmente 13 in Block 1 entsprechend vermessen werden.

Fig. 1 zeigt im Block 2, dass nach dem Vermessen der Blechpaketsegmente 13 dieselben einer Handhabung unterzogen werden, zum Beispiel durch Einsortieren derselben in ein Magazin oder durch unmittelbare Überführung derselben in Richtung auf den weiteren Montageprozess.

Dann, wenn sämtliche Blechpaketsegmente 13 vermessen werden, werden die entsprechenden Messwerte eindeutig dem entsprechenden Blechpaketsegment 13 zugeordnet, sodass für jedes in der weiteren Montage handzuhabende Blechpaketsegment 13 die entsprechenden Messwerte des Schritts 1 zur Verfügung stehen.

Fig. 1 verdeutlicht im Block 3 eine analoge Handhabung für die Wellen 12 der zu montierenden Läufer, wobei vorzugsweise sämtliche Wellen 12 in Block 1 vermessen und in Block 3 einer Handhabung unterzogen werden, und zwar durch Ablage in einem Magazin oder durch unmittelbare Zuführung derselben in Richtung auf den Montageprozess.

Dann, wenn alle Wellen 12 in Block 1 vermessen werden, wird wiederum gewährleistet, dass für jede Welle 12 die entsprechenden Messwerte des Blocks 1 eindeutig in der weiteren Montage der Läufer der elektrischen Maschinen zur Verfügung stehen.

Block 4 der Fig. 1 verdeutlicht, dass weiterhin Magnete 15 für die Läufer der elektrischen Maschinen bereitgestellt werden, wobei unterhalb des Blocks 4 der Fig. 1 ein Blister 16 aus mehreren Magneten 15 gezeigt ist. In einem solchen Blister 16 sind mehrere Magnete 15 arrayartig bereitgehalten. Durch Erfassung des Gewichts des gesamten Blisters 16 vor und nach Entnahme jeweils eines Magneten 15 kann das Gewicht des jeweils entnommenen Magneten 15 in Schritt 4 einfach und zuverlässig ermittelt werden.

Es ist auch eine hiervon abweichende Gewichts- oder Massemessung der Magneten 15 möglich, so z.B. eine Einzelvermessung aller Magnete 15.

Die Messgenauigkeit für die Massen der Magnete 15 liegt vorzugsweise in der Größenordnung von 2 mg.

Im Anschluss an das Ermitteln der Massen der Magnete 15 in Schritt 4 werden im Schritt 5 des Verfahrens der Fig. 1 die hinsichtlich ihrer Masse vermessenen Magnete 15 einer Handhabung unterzogen, und zwar entweder einer Zwischenspeicherung in einem Magazin oder einer Zuführung für den nachfolgenden Montageprozess. Unterhalb des Blocks 5 ist ein Handhabungsroboter 19 gezeigt. In jedem Fall ist gewährleistet, dass für jeden hinsichtlich seines Gewichts oder seiner Masse vermessenen Magneten 15 die jeweilige Masse für den nachfolgenden Montageprozess zur Verfügung gestellt werden kann.

Im Block 6 des Verfahrens der Fig. 1 werden für jeden herzustellenden Läufer definierte Blechpaketsegmente 13, eine definierte Welle 12 und definierte Magnete 15 ausgewählt. Die Messwerte dieser Blechpaketsegmente 13, dieser Welle 12 und dieser Magnete 15 stehen zur Verfügung.

Für den jeweils herzustellenden Läufer wird dann in Block 6 die Montageposition für die ausgewählten Magnete 15 in den Magnettaschen der ausgewählten Blechpaketsegmente 13 berechnet.

In einem Block 7 erfolgt dann unter Verwendung ausgewählter Blechpaketsegmente 13 sowie unter Verwendung ausgewählter Magnete 15 sowie unter Verwendung der berechneten Montagepositionen für die ausgewählte Magnete 15 in den ausgewählten Blechpaketen 13 eine Montage der Magnete 15 in den zu den Montagepositionen passenden Magnettaschen des jeweiligen Blechpaketsegments 13, wobei hierzu, wie unterhalb des Blocks 7 der Fig. 1 gezeigt, über eine Dosiereinrichtung Klebstoff 17 bereitgestellt wird, um die Magnete 15 in den Magnettaschen des jeweiligen Blechpaketsegments 13 zu montieren bzw. zu fixieren.

Mit Magneten 15 bestückte Blechpaketsegmente sind in Fig. 1 durch die Bezugsziffer 13' gekennzeichnet.

Die mit Magneten 15 bestückten Blechpaketsegmente 13' werden im Block 8 der Fig. 1 einer Handhabung unterzogen, und zwar in Analogie zum Block 2 derart, dass mit Magneten 15 bestückte Blechpakete 13' entweder in einem Magazin zwischengespeichert oder unmittelbar der weiteren Montage zugeführt werden. Unterhalb des Blocks 8 ist wiederum ein Handhabungsroboter 19 gezeigt.

Während in Block 6 Montagepositionen für die ausgewählten Magnete 15 in den Magnettaschen der ausgewählten Blechpaketsegmente 13 berechnet wurden, werden im Block 9 der Fig. 1 für die mit Magneten 15 bestückten Blechpaketsegmente 13' Montagepositionen auf der Welle 12 berechnet.

Die Berechnung erfolgt auf Grundlage der vermessenen Unwuchten von Blechpaketsegmenten 13, Welle 12 sowie auf Grundlage der Masse der Magneten 15.

Zur Berechnung in den Blöcken 6 und 9 werden entsprechende Modelle des Läufers bereitgehalten bzw. genutzt.

In Block 10 der Fig. 1 werden die mit Magneten 15 bestückten Blechpakete 13' an den in Block 9 der Fig. 1 bestimmten Montagepositionen auf der Welle 12 montiert, wobei in Block 9 sowohl Axialpositionen als auch Umfangspositionen für die Blechpaketsegmente 13' auf der Welle 12 berechnet werden. So kann in Axialrichtung gesehen die Reihenfolge der Blechpaketsegmente 13' sowie in Umfangsrichtung gesehen deren Relativposition im Block 9 bestimmt werden, und zwar wiederum wie in Block 6 mit dem Ziel, die Unwucht des zu montierenden Läufers so gering wie möglich zu gestalten.

Fig. 1 zeigt einen fertig montierten Läufer 18 aus einer Welle 12 und drei mit Magneten 15 bestückten Blechpaketsegmenten 13'.

Vorzugsweise ist vorgesehen, nach der oben beschriebenen Montage des Läufers 18 die Unwucht desselben auf einer Unwuchtmessmaschine 11 zu messen.

Dann, wenn diese Unwucht kleiner als ein definierter Grenzwert ist, ist der Montageprozess des Läufers 18 beendet. Ist hingegen die gemessen Unwucht des Läufers 18 größer als der definierte Grenzwert, so erfolgt nachfolgend ein Wuchten des montierten Läufers 18, und zwar vorzugsweise als positives Wuchten durch einen Materialauftrag auf den montierten Läufer 18 im Milligramm-Bereich.

Geeignete Verfahren zum Materialauftrag im Milligramm-Bereich sind dem hier angesprochenen Fachmann geläufig und bedürfen keiner näheren Erläuterung.

Das gesamte erfindungsgemäße Verfahren kann vollautomatisch durchgeführt werden. Es können Läufer mit geringer Unwucht bereitgestellt werden, insbesondere kann auf ein Negativ-Wuchten und auf das Bereithalten sogenannter Opfermassen für das Negativ-Wuchten verzichtet werden. Hierdurch ist es möglich, die axiale Baulänge eines Läufers zu minimieren oder bei gleicher Baulänge die Leistung zu steigern. Ferner kann das Gewicht eines Läufers reduziert werden.

## Patentansprüche

1. Verfahren zur Montage von Läufern (18) elektrischer Maschinen,
wobei jeder Läufer (18) eine Welle (12), ein auf der Welle angeordnetes Blechpaket aus vorzugsweise mehreren Blechpaketsegmenten (13') mit Magnettaschen und in den Magnettaschen angeordnete Magnete (15) aufweist,
mit zumindest folgenden Schritten:
Bereitstellen von Wellen (12) und Vermessen einer Unwucht mindestens einer Welle (12),
Bereitstellen von Blechpaketen oder Blechpaketsegmenten (13) und Vermessen einer Unwucht mindestens eines Blechpakets oder mindestens eines Blechpaketsegments (13),
Bereitstellen mehrerer Magnete (15) und Vermessen eines Gewichts der Magnete (15),
für jeden herzustellenden Läufer (18) Auswählen eines Blechpakets öder mehrerer Blechpaketsegmente (13), Auswählen einer Welle (12) und Auswählen von Magneten (15),
für jeden herzustellenden Läufer (18) Berechnen von Montagepositionen für die ausgewählten Magnete (15) in den Magnettaschen des.ausgewählten Blechpakets oder der ausgewählten Blechpaketsegmente (13) sowie Berechnen einer Umfangsposition für das ausgewählte Blechpaket oder einer Umfangsposition und/oder Axialposition für die ausgewählten Blechpaketsegmente (13) auf der ausgewählten Welle (12) in Abhängigkeit der vermessenen Unwucht des mindestens eines Blechpakets oder Blechpaketsegments (13), in Abhängigkeit der vermessenen Gewichte der jeweiligen Magnete (15) und in Abhängigkeit der vermessenen Unwucht der mindestens einen Welle (12),
Montieren der Magnete (15) in den berechneten Montagepositionen in den Magnettaschen des Blechpakets oder der Blechpaketsegmente (13) und Montieren des mit Magneten bestückten Blechpakets oder der mit Magneten bestückten Blechpaketsegmente (13') auf der Welle (12) in der berechneten Montageposition.

2. Verfahren nach Anspruch 1, **dadurch gekennzeichnet, dass**
zunächst die ausgewählten Magnete (15) in den Magnettaschen des ausgewählten Blechpakets oder der ausgewählten Blechpaketsegmente (13) in den berechneten Montagepositionen montiert werden,
anschließend das mit den Magneten bestückte Blechpaket oder die mit den Magneten bestückten Blechpaketsegmente (13') auf der ausgewählten Welle (12) in berechneten Montageposition montiert wird oder werden.

3. Verfahren nach Anspruch 1 oder 2, **dadurch gekennzeichnet, dass** dann, wenn der jeweilige Läufer ein unsegmentiertes Blechpaket aufweist, die Umfangsposition für das Blechpaket auf der Welle berechnet wird.

4. Verfahren nach Anspruch 1 oder 2, **dadurch gekennzeichnet, dass** dann, wenn der jeweilige Läufer (18) ein segmentiertes Blechpaket aus mehreren in Axialrichtung des Läufers hintereinander angeordneten Blechpaketsegmenten (13) aufweist, die Axialpositionen und die Umfangspositionen für die Blechpaketsegmente (13) auf der Welle (12) berechnet werden.

5. Verfahren nach einem der Ansprüche 1 bis 4, **dadurch gekennzeichnet, dass** die Unwucht der Welle (12) in mehreren axial beabstandeten Ebenen gemessen wird.

6. Verfahren nach einem der Ansprüche 1 bis 5, **dadurch gekennzeichnet, dass** die Unwucht eines Blechpaketsegments (13) in mindestens einer Ebene gemessen wird.

7. Verfahren nach einem der Ansprüche 1 bis 6, **dadurch gekennzeichnet, dass** das Berechnen der Montageposition für die Magnete (15) in den Magnettaschen des Blechpakets oder der Blechpaketsegmente (13) sowie vorzugsweise das Berechnen der Montageposition für das Blechpaket oder für die Blechpaketsegmente (13) auf der Welle (12) in Abhängigkeit einer zum Montieren der Magnete in den Magnettaschen genutzten Klebermasse (17) erfolgt.

8. Verfahren nach einem der Ansprüche 1 bis 7, **dadurch gekennzeichnet, dass** nach dem Montieren der Magnete (15) in den Magnettaschen des Blechpakets oder der Blechpaketsegmente (13) sowie nach dem Montieren des Blechpakets oder der Blechpaketsegmente (13) auf der Welle (12) ein Unwucht des montierten Läufers (18) gemessen wird, wobei dann, wenn die Unwucht größer als ein Grenzwert ist, ein Wuchten des montierten Läufers (18) durchgeführt wird.

9. Verfahren nach Anspruch 8, **dadurch gekennzeichnet, dass** Wuchten als Positiv-Wuchten durch Materialauftrag im Milligramm-Bereich erfolgt.

## Claims

1. Method for assembling rotors (18) of electrical machines,
wherein each rotor (18) has a shaft (12), a laminated core which is arranged on the shaft and preferably comprises a plurality of laminated core segments (13') with magnet pockets, and magnets (15) which are arranged in the magnet pockets,
comprising at least the following steps:
providing the shafts (12) and measuring an unbalance of at least one shaft (12),
providing laminated cores or laminated core segments (13) and measuring an unbalance of at least one laminated core or at least one laminated core segment (13),
providing a plurality of magnets (15) and measuring a weight of the magnets (15),
for each rotor (18) to be produced, selecting a laminated core or a plurality of laminated core segments (13), selecting a shaft (12) and selecting magnets (15),
for each rotor (18) to be produced, calculating mounting positions for the selected magnets (15) in the magnet pockets of the selected laminated core or the selected laminated core segments (13) and calculating a circumferential position for the selected laminated core or a circumferential position and/or axial position for the selected laminated segments (13) on the selected shaft (12) depending on the measured unbalance of the at least one laminated core or laminated core segment (13), depending on the measured weights of the respective magnets (15) and depending on the measured unbalance of the at least one shaft (12),
mounting the magnets (15) in the calculated mounting positions in the magnet pockets of the laminated core or the laminated core segments (13) and mounting the laminated core that is fitted with magnets or the laminated core segments (13') that are fitted with magnets on the shaft (12) in the calculated mounting position.

2. Method according to Claim 1, **characterized in that** initially the selected magnets (15) are mounted in the magnet pockets of the selected laminated core or the selected laminated core segments (13) in the calculated mounting positions,
then the laminated core that is fitted with the magnets or the laminated core segments (13') that are fitted with the magnets is or are mounted on the selected shaft (12) in the calculated mounting position.

3. Method according to Claim 1 or 2, **characterized in that**, when the respective rotor has a non-segmented laminated core, the circumferential position for the laminated core on the shaft is calculated.

4. Method according to Claim 1 or 2, **characterized in that**, when the respective rotor (18) has a segmented laminated core comprising a plurality of laminated core segments (13) which are arranged one behind the other in the axial direction of the rotor, the axial positions and the circumferential positions for the laminated core segments (13) on the shaft · (12) are calculated.

5. Method according to one of Claims 1 to 4, **characterized in that** the unbalance of the shaft (12) is measured in a plurality of axially spaced-apart planes.

6. Method according to one of Claims 1 to 5, **characterized in that** the unbalance of a laminated core segment (13) is measured in at least one plane.

7. Method according to one of Claims 1 to 6, **characterized in that** the mounting position for the magnets (15) in the magnet pockets of the laminated core or the laminated core segments (13) is calculated, and preferably the mounting position for the laminated core or for the laminated core segments (13) on the shaft (12) is calculated, depending on an adhesive compound (17) used for mounting the magnets in the magnet pockets.

8. Method according to one of Claims 1 to 7, **characterized in that**, after the magnets (15) are mounted in the magnet pockets of the laminated core or the laminated core segments (13) and after the laminated core or the laminated core segments (13) are mounted on the shaft (12), an unbalance of the assembled rotor (18) is measured, wherein, when the unbalance is greater than a limit value, balancing of the mounted rotor (18) is carried out.

9. Method according to Claim 8, **characterized in that** balancing is performed as positive balancing by material removal in the milligram range.

## Revendications

1. Procédé de montage de rotors (18) de machines électriques,
chaque rotor (18) comportant un arbre (12), un noyau feuilleté disposé sur l'arbre et comprenant de préférence plusieurs segments de noyau feuilleté (13') pourvus de poches d'aimant et d'aimants (15) disposés dans les poches d'aimant,
ledit procédé comprenant au moins les étapes suivantes :
fournir des arbres (12) et mesurer un déséquilibre d'au moins un arbre (12),
fournir des noyaux feuilletés ou des segments de noyau feuilletés (13) et mesurer un déséquilibre d'au moins un noyau feuilleté ou d'au moins un segment de noyau feuilleté (13),
fournir plusieurs aimants (15) et mesurer un poids des aimants (15),
pour chaque rotor (18) à réaliser sélectionner un noyau feuilleté ou plusieurs segments de noyau feuilleté (13), sélectionner un arbre (12) et sélectionner des aimants (15),
pour chaque rotor (18) à réaliser calculer des positions de montage des aimants (15) sélectionnés dans les poches d'aimant du noyau feuilleté sélectionné ou des segments de noyau feuilleté (13) sélectionnés et calculer une position circonférentielle du noyau feuilleté sélectionné ou une position circonférentielle et/ou position axiale des segments de noyau feuilleté (13) sélectionnés sur l'arbre (12) sélectionné en fonction du déséquilibre mesuré de l'au moins un noyau feuilleté ou segment de noyau feuilleté (13), en fonction des poids mesurés des aimants (15) respectifs et en fonction du déséquilibre mesuré de l'au moins un arbre (12),
monter les aimants (15) dans les positions de montage calculées dans les poches d'aimant du noyau feuilleté ou des segments de noyau feuilleté (13) et monter le noyau feuilleté équipé d'aimants ou les segments de noyau feuilleté (13') équipés d'aimants sur l'arbre (12) dans la position de montage calculée.

2. Procédé selon la revendication 1, **caractérisé en ce que**
les aimants (15) sélectionnés sont d'abord montés dans les poches d'aimant du noyau feuilleté sélectionné ou des segments de noyau feuilleté (13) sélectionnés dans les positions de montage calculées,
puis le noyau feuilleté équipé des aimants ou les segments de noyau feuilleté (13') équipés des aimants sont montés sur l'arbre (12) sélectionné dans, la position de montage calculée.

3. Procédé selon la revendication 1 ou 2, **caractérisé en ce que**, lorsque le rotor respectif comporte un noyau feuilleté non segmenté, la position circonférentielle du noyau feuilleté sur l'arbre est calculée.

4. Procédé selon la revendication 1 ou 2, **caractérisé en ce que**, lorsque le rotor (18) respectif comporte un noyau feuilleté segmenté parmi plusieurs segments de noyau feuilleté (13) disposés les uns derrière les autres dans la direction axiale du rotor, les positions axiales et les positions circonférentielles des segments de noyau feuilleté (13) sur l'arbre (12) sont calculées.

5. Procédé selon l'une des revendications 1 à 4, **caractérisé en ce que** le déséquilibre de l'arbre (12) est mesuré dans plusieurs plans espacés axialement.

6. Procédé selon l'une des revendications 1 à 5, **caractérisé en ce que** le déséquilibre d'un segment de noyau feuilleté (13) est mesuré dans au moins un plan.

7. Procédé selon l'une des revendications 1 à 6, **caractérisé en ce que** le calcul de la position de montage des aimants (15) dans les poches d'aimant du noyau feuilleté ou des segments de noyau feuilleté (13) et de préférence le calcul de la position de montage du noyau feuilleté ou des segments de noyau feuilleté (13) sur l'arbre (12) est effectué en fonction d'une matière adhésive (17) utilisée pour monter les aimants dans les poches d'aimant.

8. Procédé selon l'une des revendications 1 à 7, **caractérisé en ce que**, après montage des aimants (15) dans les poches d'aimant du noyau feuilleté ou des segments de noyau feuilleté (13) et après montage du noyau feuilleté ou des segments de noyau feuilleté (13) sur l'arbre (12), un déséquilibre du rotor (18) monté est mesuré, le rotor (18) monté étant équilibré si le déséquilibre est supérieur à une valeur limite.

9. Procédé selon la revendication 8, **caractérisé en ce que** l'équilibrage s'effectue comme un équilibrage positif par application de matière de l'ordre du milligramme.
